Europäisches Patentamt

European Patent Office

Office européen des brevets

(19)

(11) Veröffentlichungsnummer: **0 125 550**
**A1**

(12) **EUROPÄISCHE PATENTANMELDUNG**

(21) Anmeldenummer: **84104792.1**

(22) Anmeldetag: **28.04.84**

(51) Int. Cl.³: **F 16 B 47/00**
**B 65 G 49/06**

(30) Priorität: **13.05.83 DE 3317469**

(43) Veröffentlichungstag der Anmeldung:
**21.11.84 Patentblatt 84/47**

(84) Benannte Vertragsstaaten:
**FR GB IT**

(71) Anmelder: **Josef Bohle Stiftung + Co. KG.**
**Dieselstrasse 10**
**D-5657 Haan(DE)**

(72) Erfinder: **Bohle, Ulrich**
**19, Buchweizenberg**
**D-5650 Solingen(DE)**

(74) Vertreter: **Tackenberg, Karl, Dipl.-Ing.**
**Birkenweiher 15**
**D-5650 Solingen(DE)**

(54) **Vakuumsauger.**

(57) Die Anbringung eines Vakuumsaugers mit einer aus gummielastischem Werkstoff bestehenden Saugscheibe (1 bzw. 2), der nach Andrücken an einer Oberfläche und dabei erfolgendem Verformen der Saugscheibe (1 bzw. 2) zwischen dieser und der Oberfläche einen Dichtraum mit Unterdruck einschließt, ist im wesentlichen auf solche Oberflächen beschränkt, die glatt und eben sind.

Um die Anbringung eines derartigen Vakuumsaugers auch an rauhen, gewölbten und/oder strukturierten Oberflächen zu ermöglichen und das Haftvermögen auch für den Fall sicherzustellen, daß mit dem Vakuumsauger schwerere Gegenstände angehoben, transportiert oder gehalten werden, besteht die Saugscheibe (1 bzw. 2) des Vakuumsaugers aus mindestens zwei im Verbund aufgebauten, fest miteinander verbundenen Schichten (1', 1''), von denen die der Haftung des Vakuumsaugers an einer Oberfläche dienende Schicht (1'') gegenüber der übrigen Schicht (1') eine geringere Shorehärte aufweist.

FIG. 1

Croydon Printing Company Ltd.

-1-

Firma Josef Bohle Stiftung + Co. KG.
5657 Haan, Dieselstraße 1o
-------------------------------------------------------

Vakuumsauger

-------------------------------------------------------

Die Erfindung betrifft einen mit einer aus gummielastischem Werkstoff bestehenden Saugscheibe versehenen Vakuumsauger, der nach Andrücken an eine
Oberfläche und dabei erfolgendem Verformen der Saugscheibe zwischen dieser und der Oberfläche einen
Dichtraum mit Unterdruck einschließt.

Derartige Vakuumsauger finden beispielsweise zum Aufhängen von Gegenständen oder zum Anheben und
Transportieren von Gegenständen, wie Glasscheiben,
Kunststoffplatten, Keramikplatten, Blechen o.dgl.,
Verwendung. Durch die Verformbarkeit der Saugscheibe
wird zum einen dichtes Anliegen des Vakuumsaugers an
der Oberfläche ermöglicht. Zum anderen wird das
Volumen des von der Saugscheibe eingeschlossenen
Raumes vergrößert, wodurch in dem Raum Unterdruck
entsteht, durch den die zum festen Haften des Vakuumsaugers an der Oberfläche erforderliche Saugwirkung
erzielt wird.

Hinsichtlich der Erzeugung des Unterdruckes sind zwei
grundsätzlich verschiedene Arten von Vakuumsaugern zu
unterscheiden.

-2-

Bei einem bekannten, mit einem napfförmigen Sauger versehenen Vauumsauger wird zum Anbringen des Vakuumsaugers an einer Oberfläche der Sauger mit seinem mittleren Bereich an die Oberfläche angedrückt und dabei verformt. Bei Loslassen des Vakuumsaugers wölbt sich der Sauger durch Rückstellkräfte, die durch Form und Beschaffenheit des Saugers bedingt sind, wieder auf, wobei sich der Sauger mit seiner Randzone dicht an die Oberfläche anlegt und in dem eingeschlossenen Raum ein Unterdruck entsteht, da durch die dichte Anlage des Saugers an der Oberfläche Nachströmen von Luft in den eingeschlossenen Raum verhütet wird ( vgl. DE-PS 27 34 o12).

Bei einem anderen bekannten, mit einer Saugscheibe und einem Gehäusekopf versehenen Vakuumsauger wird die Saugscheibe mit ihrer Randzonenfläche dicht an die Oberfläche angelegt und anschließend ihr mittlerer Bereich mittels eines in dem Gehäusekopf angelenkten Handhebels von der Oberfläche abgezogen, wobei sich der Gehäusekopf im Bereich der Randzonenfläche an der Saugscheibe abstützt. Es entsteht auch bei diesem Vakuumsauger beim Abziehen der Saugscheibe mit ihrem mittleren Bereich an der Oberfläche Unterdruck in dem Raum zwischen Saugscheibe und Oberfläche, durch den ebenfalls die gewünschte Haftung des Vakuumsaugers an der Oberfläche gewährleistet ist ( vgl. DE-OS 18 o7 488).

Den bekannten Vakuumsaugern haftet der Nachteil an, daß ihre Anbringung im wesentlichen auf solche Oberflächen beschränkt ist, die glatt und eben sind, weil die Saugscheibe aus Gründen der Stabilität und sicherer Haftung insbesondere beim Anheben, Transportieren oder Halten schwererer Gegenstände aus hartelastischem Werkstoff bestehen muß. Mit einer derartigen Saugscheibe läßt sich aber bei rauhen und/oder profilierten sowie gewölbten Oberflächen keine dichte Anlage an der Oberfläche herstellen. Dies ist vielmehr nur dann möglich, wenn die Saugscheibe weichelastisch ist.

Der Erfindung liegt daher die Aufgabe zugrunde, einen Vakuumsauger der gattungsgemäßen Art so auszubilden, daß dieser nicht nur an glatten und ebenen, sondern auch an rauhen, gewölbten und/oder strukturierten Oberflächen sicher angebracht werden kann, wobei das Haftvermögen auch für den Fall sichergestellt ist, daß mit dem Vakuumsauger schwerere Gegenstände angehoben, transportiert oder gehalten werden.

Die Lösung der Aufgabe besteht erfindungsgemäß darin, daß die Saugscheibe des Vakuumsaugers aus mindestens zwei im Verbund aufgebauten, fest miteinander verbundenen Schichten besteht, von denen die der Haftung des Vakuumsaugers an einer Oberfläche dienende Schicht gegenüber der übrigen Schicht eine geringere Shorehärte aufweist.

Der erfindungsgemäße Vakuumsauger gewährleistet sicheres Haften an rauhen und gewölbten sowie selbst stärker strukturierten Oberflächen auch beim Anheben, Transportieren oder Halten schwererer Gegenstände, da die der Haftung dienende Schicht der Saugscheibe weichelastisch ist, während der übrige tragende Teil der Saugscheibe die Elastizität aufweist, die einerseits ein Verformen dieses Teiles zum Zwecke des Erzeugens des Unterdruckes in dem von der Saugscheibe und der Oberfläche eingeschlossenen Raum ermöglicht, andererseits aber auch die Stabilität besitzt, die sie als tragender Teil erfordert. Die feste Verbindung der einzelnen Schichten der Saugscheibe erfolgt dabei vorzugsweise durch Vulkanisieren.

Eine vorteilhafte Weiterbildung der Erfindung besteht darin, daß die der Haftung dienende Schicht der Saugscheibe ringförmig gestaltet ist.

Diese Ausbildung der Saugscheibe wirkt sich in folgender Hinsicht fortschrittlich aus.

Beim Vulkanisieren der einzelnen Schichten der Saugscheibe läßt sich nicht ausschließen, daß infolge unterschiedlichen Schrumpfmaßes Verwölbungen eintreten mit der Folge, daß die Saugscheibe vor dem Verformen nicht plan, sondern leicht nach innen gewölbt ist. Dies hat zur Folge, daß bereits nach Ansetzen des Vakuumsaugers an eine Oberfläche zwischen der Saugscheibe und der Oberfläche ein unerwünscht großes Luftvolumen vorhanden ist, wodurch möglicherweise beim Verformen der Saugscheibe kein ausreichender Unterdruck in dem von der Saugscheibe und der Oberfläche eingeschlossenen Raum erzielt werden kann. Durch die ringförmige Ausbildung der der Haftung dienenden Schicht der Saugscheibe wird Werfen der Schicht verhütet, weil die Schicht gegenüber dem übrigen Teil der Saugscheibe eine geringere Fläche aufweist und dadurch Werfen in wesentlich geringerem Maße ausgesetzt ist.

Eine weitere vorteilhafte Weiterbildung der Erfindung besteht darin, daß auf der ringförmigen Schicht eine weitere ringförmige Schicht angeordnet ist, deren Shorehärte gegenüber der ersten ringförmigen Schicht nochmals vermindert ist.

-5-

Die Saugscheibe stellt sich dadurch in einem 3-stufigen Shorehärteabfall von der tragenden Schicht zur dichtenden Schicht hin dar. Diese Ausbildung wirkt sich in den Fällen vorteilhaft aus, in denen die Oberfläche beispielsweise des Gegenstandes, der angehoben, transportiert oder gehalten werden soll. sowohl rauh als auch stärker profiliert ist. Die äußere Schicht mit der geringsten Shorehärte ist so weichelastisch, daß sie in die Poren der rauhen Oberfläche eindringt und das Vakuum abdichtet. Die mittlere Schicht ist von geringerer Weichelastizität, da sie nicht in die feineren Poren der Oberfläche eindringen muß, sondern nur so flexibel sein muß, daß sich die Saugscheibe der Makrostruktur der Oberfläche anschmiegen kann. Diese Schicht kann also schon etwas härter sein und somit zur Stabilität beitragen. Die obere Schicht der Saugscheibe braucht nur so elastisch zu sein, daß sie sich zwecks Erzeugung des Vakuums verformen läßt. Sie leistet den größten Beitrag zur Stabilität des Werkzeuges.

Die Erfindung ist nachstehend in zwei Ausführungsbeispielen anhand der Zeichnung näher erläutert. Es zeigt:

Figur 1 den Vakuumsauger mit zwei Saugscheiben in Ansicht,
Figur 2 den Vakuumsauger in Draufsicht,
Figur 3 einen Teil-Schnitt und
Figur 4 den Vakuumsauger in einer anderen Ausführungsform der Erfindung in einem Teil-Schnitt.

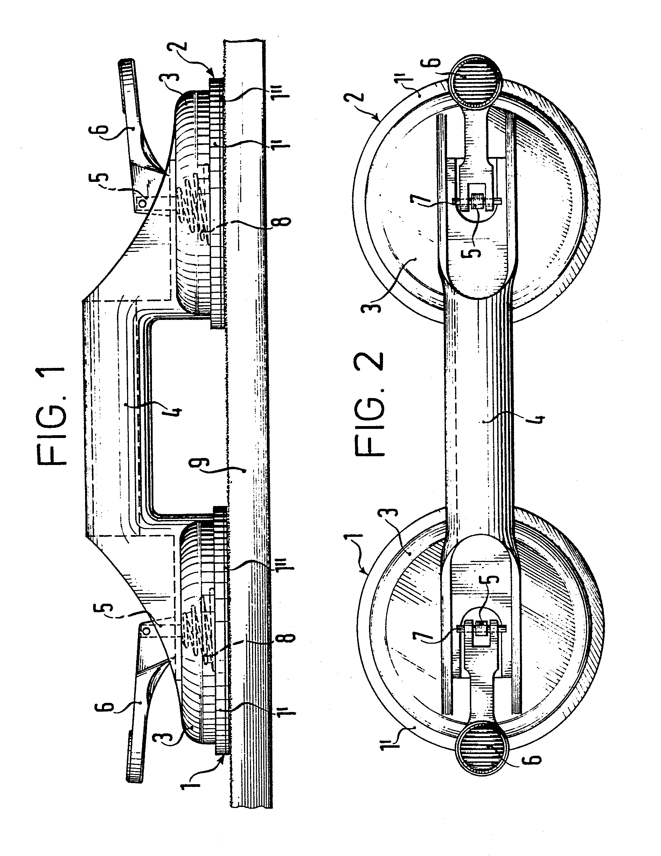

Der in der Zeichnung in den Figuren 1-3 dargestellte Vakuumsauger besitzt zwei Saugscheiben 1,2. Eine jede Saugscheibe 1,2 liegt an dem flächigen Rand einer aus starrem Werkstoff bestehenden Kappe 3 an. Die Kappen 3 sind durch einen Griff 4 fest miteinander verbunden. In eine jede Saugscheibe 1,2 ist eine in der Zeichnung nicht dargestellte Metallscheibe eingelassen, an der ein Zapfen 5 mit seinem einen Ende befestigt ist, der mit seinem anderen Ende ein Loch in der Kappe 3 durchsetzt. Einer jeden Saugscheibe 1,2 ist ein Exzenterhebel 6 zugeordnet. Dieser ist mit seinem gegabelten Ende mit dem Zapfen 5 durch einen Stift 7 verbunden, der eine Bohrung des Zapfens 5 und Bohrungen der Gabelenden des Exzenterhebels 6 durchsetzt. Auf einem jeden Zapfen 5 ist eine Rückstellfeder 8 angeordnet, die sich mit ihrem einen Ende an der Saugscheibe 1 bzw. 2 und mit ihrem anderen Ende an der Kappe 3 abstützt. Mit 9 ist ein mit einer rauhen Oberfläche versehener Gegenstand bezeichnet, an dem der Vakuumsauger haftet. Durch Umlegen der Exzenterhebel 6 werden die Zapfen 5 angehoben und dabei die Saugscheiben 1,2 verformt.

Eine jede Saugscheibe 1,2 besteht gemäß des in der Zeichnung in den Figuren 1-3 dargestellten Ausführungsbeispiel der Erfindung aus zwei im Verbund aufgebauten Schichten 1', 1", die durch Vulkanisieren miteinander verbunden sind. Die Schicht 1" ist ringförmig gestaltet und in die Schicht 1' eingelassen. Die der Haftung des Vakuumsaugers an einer Oberfläche dienende Schicht 1" weist gegenüber der Schicht 1' eine geringere Shorehärte auf; Beispiel: Härte der Schicht 1' fünfundfünfzig Shore, Härte der Schicht 1" zwanzig Shore. Die Shorehärte der Schicht 1" ist also so bemessen, daß sich die Schicht 1" auch der rauhen, gewölbten oder strukturierten Oberfläche anzupassen vermag.

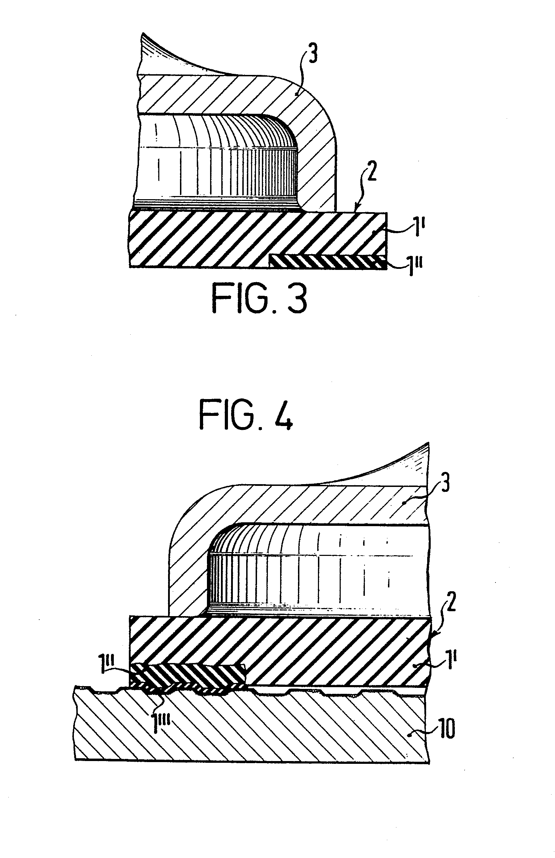

Bei dem in der Zeichnung in Figur 4 dargestellten Ausführungsbeispiel der Erfindung ist auf der ringförmigen Schicht 1" eine weitere ringförmige Schicht 1''' angeordnet. Die Shorehärte der ringförmigen Schicht 1''' ist gegenüber der ringförmigen Schicht 1" nochmals vermindert. Sie beträgt beispielsweise fünfzehn Shore. Mit 1o ist ein Gegenstand mit rauher und stärker profilierter Oberfläche bezeichnet. Wie aus der Zeichnung hervorgeht, paßt sich die Schicht 1''' dicht der profilierten Oberfläche des Gegenstandes 1o an.

Die Erfindung beschränkt sich in ihrer Anwendung selbstverständlich nicht auf einen Vakuumsauger mit zwei Saugscheiben, sondern kann auch bei einem Vakuumsauger mit nur einer oder mehr als zwei Saugscheiben Anwendung finden.

-8-

Patentansprüche

1. Mit einer aus gummielastischem Werkstoff bestehenden Saugscheibe ( 1 bzw. 2) versehener Vakuumsauger, der nach Andrücken an eine Oberfläche und dabei erfolgendem Verformen der Saugscheibe ( 1 bzw. 2) zwischen dieser und der Oberfläche einen Dichtraum mit Unterdruck einschließt, dadurch gekennzeichnet, daß die Saugscheibe (1 bzw. 2) des Vakuumsaugers aus mindestens zwei im Verbund aufgebauten, fest miteinander verbundenen Schichten (1', 1") besteht, von denen die der Haftung des Vakuumsaugers an einer Oberfläche dienende Schicht (1") gegenüber der übrigen Schicht (1') eine geringere Shorehärte aufweist.

2. Vakuumsauger nach Anspruch 1, dadurch gekennzeichnet, daß die der Haftung dienende Schicht (1") der Saugscheibe ( 1 bzw. 2) ringförmig gestaltet ist.

3. Vakuumsauger nach Anspruch 1 und 2, dadurch gekennzeichnet, daß auf der ringförmigen Schicht (1") eine weitere ringförmige Schicht (1''') angeordnet ist, deren Shorehärte gegenüber der ersten ringförmigen Schicht (1") nochmals vermindert ist.

# FIG. 1

# FIG. 2

0125550

**FIG. 3**

**FIG. 4**

8447

## EUROPÄISCHER RECHERCHENBERICHT

**Europäisches Patentamt**

**0125550**
Nummer der Anmeldung

EP  84 10 4792

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 871 054  (ZINKE) <br> * Spalte 1, Zeile 70 - Spalte 2, Zeile 4; Figur 4 * | 1-3 | F 16 B   47/00 <br> B 65 G   49/06 |
| | --- | | |
| A | FR-A-  521 267  (PILKINGTON) | | |
| | --- | | |
| A | US-A-3 976 274  (LANGGUTH) | | |
| | --- | | |
| A | US-A-4 356 989  (IRELAND) | | |
| | --- | | |
| D,A | DE-A-2 734 012  (BOHLE) | | |
| | --- | | |
| D,A | DE-A-1 807 488  (BOHLE) | | |
| | ----- | | |

**RECHERCHIERTE SACHGEBIETE (Int. Cl. ³)**

B 25 B
B 65 G
B 66 C
F 16 B

Der vorliegende Recherchenbericht wurde für alle Patentansprüche erstellt.

| Recherchenort <br> DEN HAAG | Abschlußdatum der Recherche <br> 22-08-1984 | Prüfer <br> VAN DER WAL W |
|---|---|---|